# EUROPEAN PATENT APPLICATION

(11) **EP 3 026 559 A1**
(43) Date of publication of application: **01.06.2016**
(21) Application number: 14306920.1
(22) Date of filing: 28.11.2014
(51) Int. Cl.: G06F 11/10

(54) **Method and device for providing verifying application integrity**

(71) Applicant: Thomson Licensing, 92130 Issy-les-Moulineaux (FR)
(72) Inventor: Salmon-Legagneur, Charles, 35576 Cesson Sévigné (FR); Karroumi, Mohamed, 35576 Cesson Sévigné (FR)
(74) Representative: Browaeys, Jean-Philippe

(57) **Abstract**

During execution (S302) of a modified application that has been obtained by modification of an unmodified application a device (110) determines (S304) that code corresponding to the unmodified application also corresponds to the modified application, generates a checksum for the code corresponding to the unmodified application that is compared (S306) with a stored checksum for the unmodified application to determine whether these match, and determines (S310) that the integrity of the modified application has been successfully verified in case the modified application corresponds to the code corresponding to the unmodified application and in case the checksum for the code corresponding to the unmodified application matches the stored checksum for the unmodified application. The solution is particularly suitable for devices using the Android OS since the DEX during installation is optimized to an ODEX for which there is no certified checksum.

## Description

### TECHNICAL FIELD

The present disclosure relates generally to computer systems and in particular to integrity of software code in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

It is, for various reasons, often desirable to ensure that processing devices execute software that has not been tampered with. To this end, different techniques can be used to protect a software image against tampering attacks. The most common technique is to compute a signature or a checksum over code segments and then verify the signature or checksums at a later stage. Checksums are generally computed and verified without any secret while the generation of a cryptographic signature requires a private key and verification of the signature for the corresponding public key.

An example of checksum-based protection is CRC32 for the Portable Executable (PE) format used in the Windows operating system. A PE header contains a CRC32 field that gives the checksum of the corresponding code section. To bypass the protection successfully, an attacker first modifies the code section and then replaces the original checksum with a new value computed over the modified code section. This type of attack is possible since the attacker does not need any secret to update checksums of modified code sections.

Given the weakness of checksums, cryptographic signatures are a preferred solution. The generation of the signature is performed before the code release and uses a private (and thus secret) key. The associated public key is appended to the code and later used to check the code integrity at installation of the code or at runtime. An attacker can still modify the code, but since a correct signature for the code cannot be generated without the private key, the attack fails.

Many solutions exist for checking the integrity of applications based on native code, such as the solutions provided by Arxan (GuardIT™), Metaforic (Metafortress™), etc. Native code is a set of assembler instructions directly executable by the processor. The set of instructions does not change after installation, which means that a program integrity value remains the same before and after installation (i.e. remains constant over time). In this case, the signature can be generated beforehand and delivered with the application package.

On the other hand, applications with interpreted code - such as code written in Java, Android DEX code, etc. - comprise intermediate instructions that must be passed through an interpreter before it is executed. Unlike native code, interpreted code can be modified after installation time for optimization purposes. The code modification is generally very dependent on the target platform and is thus not necessarily predictable. If the code is modified, a signature generated at compilation time cannot be used to check code integrity and authenticity dynamically at runtime.

To distribute and install application software onto the previously mentioned Android operating system a file format called APK - Android Application PacKage - is used. To make an APK file, a program for Android is first compiled to an intermediate language, and then its parts are packaged into a compressed archive file (ZIP format). The archive file contains the entire program code in a single DEX (Dalvik Executable code) file, various resources (e.g. image files), and the manifest of the APK file. The archive file comprises two additional files: CERT.SF and CERT.RSA. CERT.SF contains cryptographic hashes of all other archive files; CERT.RSA contains the public key used for signature verification. Only CERT.SF is signed with the RSA private key. The RSA signature for the CERT.SF enables validation of the entire content of the APK file during installation. Indeed, all the files mentioned in the CERT.SF file are *indirectly* signed because CERT.SF contains their hashes. Altering any file before installation would cause an error because the software would detect that a file digest does not match the hash in the CERT.SF file. Alternatively, modifying a cryptographic hash value inside the CERT.SF file (as in the attack against checksum-based verification already described) would lead to an error during the signature verification.

A DEX file header also contains a global checksum for the contents of the DEX file. At the first execution of the application, the Android system uses an optimizer which modifies a DEX interpreted byte code into an optimized machine-instructions sequence called ODEX (Optimized DEX) just in time before execution. The optimizer also updates the checksum. The ODEX file is then stored in a specific repository within the Android file system for future use. The ODEX file then becomes the reference for the application software and, when it is present, the original DEX file is not used anymore.

At runtime, the system may verify the integrity of the application using the ODEX checksum. However this option is not set by default in the Android operating system and the Dalvik machine, which is used to execute ODEX code, does not always check ODEX checksums, since checksum verification has a non-negligible impact on execution performance.

Thus it can be seen that in an Android system, the APK signature is verified only at installation time. Furthermore, the APK is not signed by a central authority; the developers use their own non-trusted self-signed certificates that can be easily generated.

As already mentioned, Android applications use an interpreter portable format (DEX). This binary format must execute on a large set of devices with different architectures and characteristics: ARM, x86, MIPS, Little/Big Endian etc. In order to improve performance, the DEX code is modified at the first use of the application to produce the ODEX that is optimized for the target device. During optimization, various things can be modified in the code: instructions can be replaced by others, the alignment of instructions may be changed, the byte order can be swapped, and so on.

The optimization then raises a security issue. While the signature of the DEX file can still be verified, this is not the case for the ODEX file since it has been modified and its integrity is no more linked to the original DEX signature. In other words, integrity and authenticity can only be verified at installation, but not at runtime since an attacker is able to modify the ODEX code and update the checksum in the header accordingly.

The system is thus vulnerable to at least two classes of attacks: the remote attack and the root attack. In the remote attack, a downloaded malicious application elevates its privileges and gains system permissions. The malicious application may then tamper with ODEX files stored on the Dalvik cache repository of the SD card. In the root attack, the attacker obtains an Android device, for example by purloining the device or by accessing the device when the owner is absent without locking the device session. The attacker can then download the application from the SD card through a USB link, modify the application, and then push the modified application back onto the SD card. For the latter attack to be successful, the device must be "rooted" (i.e. allow "root access" control of the device's Android system).

The trust in Android application integrity can thus be broken during the application's life cycle. It is possible to trust what is installed on an Android system, but not necessarily what is running.

It will be appreciated that it is desired to have a solution that overcomes at least part of the problems related to the integrity and authenticity of interpreted code applications. The present disclosure provides such a solution.

### SUMMARY OF DISCLOSURE

In a first aspect, the disclosure is directed to a device for determining the integrity of a modified application that has been obtained by modification of an unmodified application. The device comprises memory configured to store the modified application and a stored checksum for the unmodified application, and a processing unit configured to, during execution of the modified application: determine that code corresponding to the unmodified application also corresponds to the modified application, generate a checksum for the code corresponding to the unmodified application, compare the checksum for the code corresponding to the unmodified application and the stored checksum for the unmodified application to determine whether these match, and determine that an integrity of the modified application has been successfully verified in case the modified application corresponds to the code corresponding to the unmodified application and in case the checksum for the code corresponding to the unmodified application matches the stored checksum for the unmodified application.

Various embodiments of the first aspect include:
That the memory is configured to store a signature for the stored checksum for the unmodified application and a signing certificate and wherein the processing unit is configured to verify the validity of the signature using the signing certificate, and to determine that the integrity of the modified application has been successfully verified also in case the signature is successfully verified.

That the processor is configured to perform an inverse modification on the modified code to obtain the code corresponding to the unmodified application to determine that the code corresponding to the unmodified application also corresponds to the modified application.

That the code corresponding to the unmodified application is the unmodified application and wherein the memory is further configured to store the unmodified application. It is advantageous that the processor is configured to determine whether any differences between the modified code and the code corresponding to the unmodified application correspond to legitimate transformations obtained during the modification to determine that the code corresponding to the unmodified application also corresponds to the modified application. It is alternatively advantageous that the processor is configured to perform the modification on the code corresponding to the unmodified application to obtain a second modified code and compare the modified code and the second modified code to determine that the code corresponding to the unmodified application also corresponds to the modified application.

That the unmodified application is implemented as Dalvik EXecutable code and the modified application is implemented as Optimized Dalvik Executable code.

That the device is a smartphone or a tablet.

In a second aspect, the disclosure is directed to a method for determining the integrity of a modified application that has been obtained by modification of an unmodified application. During execution of the modified application, a device determines that code corresponding to the unmodified application also corresponds to the modified application, generates a checksum for the code corresponding to the unmodified application, compares the checksum for the code corresponding to the unmodified application and a stored checksum for the unmodified application to determine whether these match, and determines that an integrity of the modified application has been successfully verified in case the modified application corresponds to the code corresponding to the unmodified application and in case the checksum for the code corresponding to the unmodified application matches the stored checksum for the unmodified application.

Various embodiments of the second aspect include:
That the method further comprises verifying the validity of the signature using a signing certificate, and determining that the integrity of the modified application has been successfully verified also in case the signature is successfully verified.

That the determining that code corresponding to the unmodified application also corresponds to the modified application comprises performing an inverse modification on the modified code to obtain the code corresponding to the unmodified application.

That the determining that code corresponding to the unmodified application also corresponds to the modified application comprises determining whether any differences between the modified code and the code corresponding to the unmodified application correspond to legitimate transformations obtained during the modification.

That the determining that code corresponding to the unmodified application also corresponds to the modified application comprises performing the modification on the code corresponding to the unmodified application to obtain a second modified code and comparing the modified code and the second modified code.

In a third aspect, the disclosure is directed to a computer executable program comprising instructions that, when executed by a processor, cause the processor to perform the method of the second aspect.

### BRIEF DESCRIPTION OF DRAWINGS

Preferred features of the present disclosure will now be described, by way of non-limiting example, with reference to the accompanying drawings, in which
Figure 1 illustrates an exemplary system in which the disclosure is implemented;
Figure 2 illustrates functional aspects of the exemplary system; and
Figure 3 illustrates a preferred embodiment of a method according to a preferred embodiment of the present disclosure.

### DESCRIPTION OF EMBODIMENTS

According to the present disclosure, the integrity of the ODEX is verified by verifying the signature for the corresponding DEX and by verifying that the ODEX corresponds to the DEX.

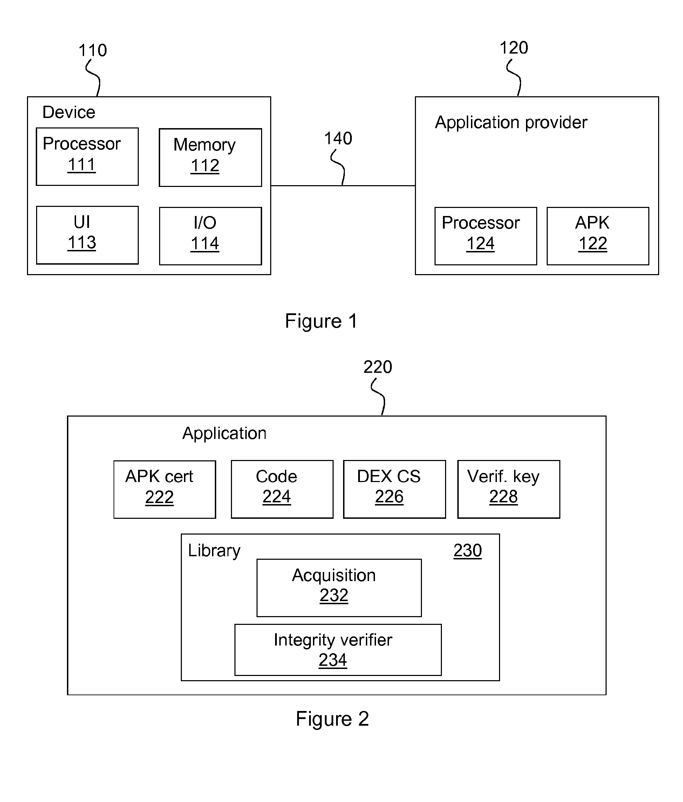

Figure 1 illustrates an exemplary system in which the disclosure is implemented. The system comprises a device 110 and an application provider (application store) 120. The device 110 can be any kind of suitable device running an Android OS, such as a smartphone or a tablet, and it comprises at least one hardware processing unit ("processor") 111, memory 112, a user interface 113 for interacting with a user, and a communications interface 114 for communication with the application provider 120 over a connection 140 such as the Internet. The skilled person will appreciate that the illustrated device is very simplified for reasons of clarity and that real devices in addition would comprise features such as power supplies and persistent storage. The application provider 120 stores at least one application APK file 122 that can be downloaded by the device 110, the APK file comprising an APK certificate signed by a signatory entity.

Figure 2 illustrates functional aspects of the exemplary system. The application 220 comprises the APK certificate 222 signed by the signatory entity, application code 224 (DEX before installation and ODEX after installation), at least one signed DEX checksum (CS) 226 (possibly in a list) and, at least if signed using a different key than the key used to sign the APK certificate, a signing certificate comprising a signature verification key 228, and a library 230 comprising a source acquisition module 232 and an integrity verification module 234.

The DEX checksum is advantageously a checksum for a portion of the DEX, and it may be provided in addition to a checksum for the entire DEX. The DEX checksum may be signed using the signing key that signed the APK certificate, but it may also be signed using a different key.

The application may also comprise a copy of the DEX for which the signed checksum was calculated, but it is also possible for the OS to keep a copy of this DEX when this is optimized to generate the ODEX or to keep at least part of the APK file with the DEX code after installation of the application.

The source acquisition module 232 and the integrity verification module 234 are comprised in the native library of the APK that is packaged with the application and has access to the extended JNI library that among other things allows signature verification.

The source acquisition module 232 is configured to take at least part of the ODEX and the corresponding DEX and compare these. There are different ways of doing this.

In a first way, the source acquisition module 232 applies the inverse optimization function to the ODEX to obtain the equivalent DEX code. Most ODEX code is reversible, depending on the type of DEX instructions. Typically, DEX optimization that only substitutes opcodes can be easily performed from DEX to ODEX and vice-versa.

In a second way, the source acquisition module 232 retrieves the original DEX code (e.g. from the APK file) and compares this with the ODEX code to determine if the difference between the two correspond to legitimate transformations due to optimization. If this is the case, it is determined that the ODEX corresponds to the original DEX. The DEX checksum is generated from the original DEX code.

In a third way, the source acquisition module 232 retrieves the original DEX code (e.g. from the APK file), performs the optimization to obtain a generated ODEX which is compared to the stored ODEX to determine whether or not they are identical. The DEX checksum is generated from the original DEX code.

In the three ways, it is thus determined that the ODEX corresponds to a stored DEX or a generated DEX. Each of these DEXs thus correspond to the ODEX and to the DEX that was used to generate the ODEX.

Once the source acquisition module 232 has determined that the present ODEX has been generated from a DEX corresponding to the signed DEX, the integrity verification module 234 can verify the current DEX checksum and the signature.

For the first way, the source acquisition module 232 computes a current DEX checksum from the generated DEX and compares it to the signed DEX checksum 226. A match indicates that the ODEX was obtained from the obtained DEX. For the second and third ways, the source acquisition module 232 computes the current DEX checksum from the original DEX. For the fourth way, the current DEX checksum is computed from the original non optimized DEX code.

The integrity verification module 234 is configured to retrieve the public verification key 228 from the signing certificate (or the APK certificate, if the same key was used) in the APK. It is also configured to verify the validity of the certificate from which the verification key 228 was retrieved, and to verify the signature for the DEX.

In the instance where all verifications succeed, the ODEX is considered validated. It will be appreciated that suitable measures may be taken in other instances.

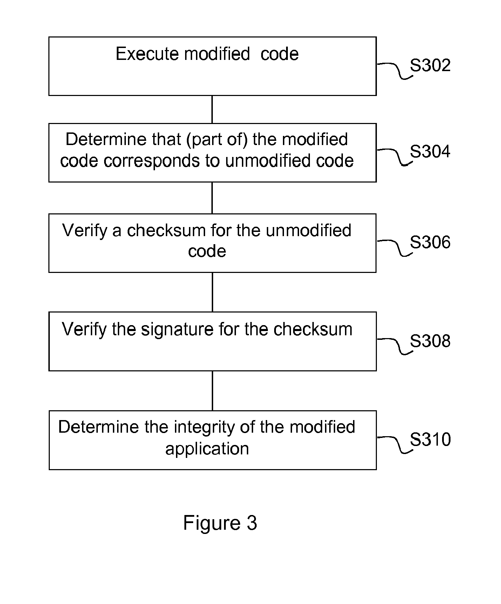

Figure 3 illustrates a flowchart of a method according to a preferred embodiment.

In step S302, the device 110 executes the ODEX, i.e. the modified code, obtained by modification of a DEX, i.e. the unmodified code, for which a signature is available.

In step S304, the device 110 determines that at least part of the ODEX corresponds to the DEX. The code corresponding to the DEX may be the DEX itself, but it may also be a copy of the DEX used to obtain the ODEX. The determination may be performed using any of the ways described herein.

In case the device 110 determines that the ODEX corresponds to the DEX, the DEX checksum is verified in step S306.

In case the DEX checksum is successfully verified, the device 110 verifies the signature for the DEX checksum in step S308.

The integrity of the ODEX is determined to have been verified, step S310, in case of positive verification of the signature since this is done in the instance where the ODEX corresponds to the DEX and the checksum for the DEX is verified.

It is noted that steps 304, 306 and 308 can be performed in any order. For example, first the signature for the DEX checksum is verified (step 308), then the DEX checksum is verified (step 306) and finally it is determined whether the ODEX and the DEX match (step 304). At least some of these steps may also be performed in parallel.

The integrity may be checked a plurality of times during the execution of the application.

It is noted that the solution does not require any modification to currently deployed Android systems.

In the present description, the term 'checksum' is intended to cover a value that enables verification of whether or not the data for which it was generated has been modified after generation of the checksum. A checksum may thus for example also be a hash value, a Cyclic Redundancy Check (CRC) value or other kind of digest; it is preferred that it is computationally infeasible to obtain the code from the checksum. In addition, while a single checksum has been used for clarity, a plurality of checksums may be used, wherein a checksum may be generated for a distinct part of the code (wherein the different parts may overlap), and that a plurality of checksums for different parts of the code are used to generate a single, global checksum that is used for the comparison. The signature may be any suitable cryptographic signature such as a Hash-based Message Authentication Code (HMAC) or a signature based on for example RSA, Digital Signature Algorithm (DSA) or Elliptic Curve Digital Signature Algorithm (ECDSA).

It will be appreciated that the present solution can counter both root attacks and remote attacks successfully.

While the present solution has been described in an Android environment, it can be adapted to other operating systems that modify the code during installation without enabling secure integrity verification of the installed application at runtime.

It will thus be appreciated that the present disclosure provides a solution that can enable runtime integrity of applications on Android devices.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (110) for determining the integrity of a modified application that has been obtained by modification of an initial application, the device comprising:
memory (112) configured to store the modified application and a stored checksum for code of the initial application; and
a processing unit (111) configured to, during execution of the modified application:
- determine that the code of the initial application corresponds to code of the modified application;
- generate a checksum for the code of the initial application to obtain a generated checksum;
- compare the generated checksum and the stored checksum for the code of the initial application to determine whether these match; and
- determine that an integrity of the modified application has been successfully verified in case the code of the modified application corresponds to the code of the initial application and in case the generated checksum matches the stored checksum for code of the initial application.

2. The device of claim 1, wherein the memory (112) is configured to store a signature for the stored checksum for the unmodified application and a signing certificate and wherein the processing unit is configured to verify the validity of the signature using the signing certificate, and to determine that the integrity of the modified application has been successfully verified also in case the signature is successfully verified.

3. The device of claim 1, wherein the processor is configured to perform an inverse modification on the modified code to obtain the code corresponding to the unmodified application to determine that the code corresponding to the unmodified application also corresponds to the modified application.

4. The device of claim 1, wherein the code corresponding to the unmodified application is the unmodified application and wherein the memory is further configured to store the unmodified application.

5. The device of claim 4, wherein the processor is configured to determine whether any differences between the modified code and the code corresponding to the unmodified application correspond to legitimate transformations obtained during the modification to determine that the code corresponding to the unmodified application also corresponds to the modified application.

6. The device of claim 4, wherein the processor is configured to perform the modification on the code corresponding to the unmodified application to obtain a second modified code and compare the modified code and the second modified code to determine that the code corresponding to the unmodified application also corresponds to the modified application.

7. The device of claim 1, wherein the unmodified application is implemented as Dalvik Executable code and the modified application is implemented as Optimized Dalvik Executable code.

8. The device of claim 1, wherein the device is a smartphone or a tablet.

9. A method for determining the integrity of a modified application that has been obtained by modification of an unmodified application, the method comprising at a device (110) during execution (S302) of the modified application:
- determining (S304) that code corresponding to the unmodified application also corresponds to the modified application;
- generating a checksum for the code corresponding to the unmodified application;
- comparing (S306) the checksum for the code corresponding to the unmodified application and a stored checksum for the unmodified application to determine whether these match; and
- determining (S310) that an integrity of the modified application has been successfully verified in case the modified application corresponds to the code corresponding to the unmodified application and in case the checksum for the code corresponding to the unmodified application matches the stored checksum for the unmodified application.

10. The method of claim 9, further comprising verifying the validity of the signature using a signing certificate, and determining that the integrity of the modified application has been successfully verified also in case the signature is successfully verified.

11. The method of claim 9, wherein determining that code corresponding to the unmodified application also corresponds to the modified application comprises performing an inverse modification on the modified code to obtain the code corresponding to the unmodified application.

12. The method of claim 9, wherein determining that code corresponding to the unmodified application also corresponds to the modified application comprises determining whether any differences between the modified code and the code corresponding to the unmodified application correspond to legitimate transformations obtained during the modification.

13. The method of claim 9, wherein determining that code corresponding to the unmodified application also corresponds to the modified application comprises performing the modification on the code corresponding to the unmodified application to obtain a second modified code and comparing the modified code and the second modified code.

14. A computer executable program (220) comprising instructions that, when executed by a processor (110), cause the processor to perform the method of claim 9.
